# EUROPÄISCHE PATENTSCHRIFT

(11) **EP 1 332 604 B1**
(45) Veröffentlichungstag und Bekanntmachung des Hinweises auf die Patenterteilung: **07.10.2009**
(21) Anmeldenummer: 01994016.2
(22) Anmeldetag: 06.11.2001
(51) Int. Cl.: H04M 3/487, H04M 3/493

(54) **VERFAHREN ZUR STEUERUNG VON ANSAGEN UND DIALOGEN IN EINER VERMITTLUNGSSTELLE**
METHOD FOR CONTROLLING ANNOUNCEMENTS AND INTERACTIVE RESPONSES IN AN EXCHANGE
PROCEDE DE COMMANDE D'ANNONCES ET DE DIALOGUES DANS UN CENTRAL TELEPHONIQUE

(30) Priorität: 10.11.2000 DE 10055642
(43) Veröffentlichungstag der Anmeldung: 06.08.2003
(73) Patentinhaber: Nokia Siemens Networks GmbH & Co. KG, 81541 München (DE)
(72) Erfinder: FRANZ, Mathias, 10178 Berlin (DE); JUGEL, Alfred, 82538 Geretsried (DE); KLEINER, Patrick, 81476 München (DE); LÖBIG, Norbert, 64291 Darmstadt (DE); PULVERER, Klaus, 81369 München (DE)
(86) Internationale Anmeldenummer: PCT/DE2001/004162
(87) Internationale Veröffentlichungsnummer: WO 2002/039706

(56) Entgegenhaltungen:
- EP-A- 0 637 160
- EP-A- 0 964 566
- GB-A- 2 325 112

## Beschreibung

Die Erfindung betrifft ein Verfahren gemäß dem Oberbegriff von Patentanspruch 1.

Das Bereitstellen von Teilnehmerleistungsmerkmalen oder Netzleistungsmerkmalen gehört zu den Aufgaben von Vermittlungsstellen in klassischen TDM-Netzen. Hierzu gehören beispielsweise Ansagen und Dialoge, die in gewissen Situationen dem A- und/oder B- Teilnehmer zugeführt werden (z. B. 'Kein Anschluß unter dieser Nummer', 'Die Rufnummer hat sich geändert, die neue Rufnummer ist 722-25940' oder Dialoge zur Abfrage von Teilnehmerdaten für die Benutzung von IN-Services).

Diese Ansagen und Dialoge können entweder von mit entsprechender Funktionalität ausgerüsteten peripheren Einrichtungen der Vermittlungsstelle bereitgestellt werden, oder von einem externen Ansage- und Dialog-System (im folgenden 'IVR-System' oder 'Interactive Voice Response System' genannt).

Ansagen und Dialoge sind insofern notwendig, da eine Vielzahl von Vorgängen in der Vermittlungsstelle bedienergeführt gesteuert wird. So erfordern beispielsweise vermittlungstechnische Ereignisse wie z.B. die Wahl einer unbeschalteten Rufnummer oder Rufe mit Wartesystemen Ansagen für den rufenden Teilnehmer.Weiterhin müssen in der Vermittlungsstelle Dienste mit Dialogen wie z.B. Dialogunterstützung zur Steuerung von Teilnehmerselbsteingaben realisiert sein. Schließlich sollten vom SCP gesteuerte IN-Dienste mit Nutzerdialogen vorhanden sein, deren Steuerung über die Schnittstelle zwischen SCP und Vermittlungsstelle mit SSP-Funktionalität erfolgt.

Allen diesen Fällen gemeinsam ist, daß die Steuerlogik für die Ansage - und Dialogfunktion in der Vermittlungsstelle selbst bzw. in den an die Vermittlungsstellen angeschlossenen Komponenten (SCP) angeordnet ist. Dies gilt auch für den Fall des angesprochenen externen Ansage- und Dialog-Systems IVR. Aus diesem Grund ist hier eine Steuerschnittstelle zur Steuerung der Ansagen und Dialoge einschließlich variabler Ansageparameter sowie zur Rückmeldung von eingesammelten Nutzereingaben zwischen Vermittlungsstelle und externem Ansage- und Dialog-System IVR erforderlich.

Beim Stand der Technik existieren gegenwärtig 2 Lösungen.

Beim ersten Lösungsansatz werden die Ansagen und Dialoge in peripheren Einrichtungen einer Vermittlungsstelle bereitgestellt. Hierzu werden periphere Einrichtungen der Vermittlungsstelle mit HW-Modulen zur Bereitstellung von Ansagen und DTMF-/Spracherkennung in die Vermittlungsstelle eingebracht. Zum Abspielen einer Ansage oder eines Dialoges wird der Teilnehmer /Trunk über eine 64 kbit/s Durchschaltung auf ein Port dieser speziellen peripheren Einrichtung für Ansagen und Dialoge geschaltet. Aus vermittlungstechnischer Sicht handelt es sich um eine Durchschaltung einer von einer A-seitigen peripheren Einrichtung über das Koppelnetz zur B-seitigen peripheren Einrichtung mit Ansage- und Dialogfunktionalität geführten Verbindung. Das B-seitige Ansage/ Dialogport wirkt wie ein B-seitiger Trunk. Die Art der zu spielenden Ansage/Dialogfunktion erfolgt durch vermittlungsstellenintere Signalisierung zur peripheren Einrichtung mit Ansage- und Dialogfunktion oder ist fest vordefiniert.

Der Vorteil dieser Integrationslösung liegt in einer kostengünstigen Bereitstellung der Ansage und Dialogfunktion sowie in einem breiten Zugriff auf die HW-Funktionalität der peripheren Einrichtung für Ansage- und Dialogfunktionalität. Nachteilig hingegen ist der Umstand einer proprietären Hardware, womit eine Nutzung der großen Palette von Hostbasierten Spracherkennungs- und Sprachsynthesealgorithmen ohne Portierungsaufwand stark eingeschränkt ist. Darüberhinaus ist bei einer solchen Integrationslösung das betreffende Ansage und Dialogsystem nicht als zentrale Resource im Netz nutzbar.

Beim zweiten Lösungsansatz werden die Ansagen und Dialoge durch externe Systeme bereitgestellt. Hierzu existieren eine Reihe von Lösungen zur Ansteuerung der Ansagen und Dialoge in einem externen System (IVR) durch die Vermittlungsstelle. Die proprietären Applikationsprotokolle (Operationen und Parameter) werden auf Basis von TDM-Signalisierungsprotokollen (ISDN-PA oder ISUP) realisiert.

Zwar kann hier im Gegensatz zur Integrationslösung das betreffende Ansage und Dialogsystem als zentrale Resource im Netz nutzbar gemacht werden.Nachteilig ist jedoch, daß die Steuerschnittstelle im Paketnetz nicht nutzbar ist.

Ein derartiger Lösungsansatz ist bereits in der deutschen Patentanmeldung DE 10047129.3 vorgeschlagen worden. Hier ist diese Steuerung allerdings ausschließlich für Paketnetze realisiert. Klassiche TDM-Netze sind dort nicht angesprochen.

Der Erfindung liegt die Aufgabe zugrunde, einen Weg aufzuzeigen, wie Ansagen - und Dialogsysteme in ein TDM-Kommunikationsnetz mit einfachen Mitteln integriert werden können.

Vorteilhaft an der Erfindung ist, daß das bekannte paketbasierte Verfahren zur Steuerung eines externen Systems zur Bereitstellung von Ansagen und Dialogen auf eine im klassischen TDM-Netz angeordnete Vermittlungsstelle übertragen wird. Damit kann insbesondere das zur Steuerung des externen Ansage - und Dialogsystems verwendete Protokoll, das ursprünglich als Signalisierungsprotokoll zur Steuerung eines Netzübergangs (Media Gateway) standardisiert wurde, benutzt werden. Aus Sicht der Vermittlungsstelle wird damit das externe Ansage- und Dialog-Systems IVR wie ein Netzübergang dargestellt. Dieser Netzübergang wird durch das Media Gateway repräsentiert, das paketbasierte Sprachinformationen in TDM-Sprachinformationen umwandeln.

Die beim angesprochenen Stand der Technik beschriebene periphere Einrichtung mit virtuellen Ansage- und/ oder Dialogports kann damit wiederverwendet werden. Ebenso wird in vorteilhafter Weise eine vom Signalisierungsweg getrennte Verbindung zur Übertragung des TDM-Nutzdatenstroms zwischen Vermittlungsstelle und externem Ansage - und Dialogsystem realisiert. Insofern findet damit eine Betrachtung des externen Ansage - und Dialogsystems als Kombination von einem externen Ansage- und Dialogsystem im Paketnetz mit direkter paketbasierter Schnittstelle für die Ansagen und Endbenutzereingaben und einem Media Gateway zur Umwandlung der paketbasierten Nutzdaten in ein TDM-Datenstrom statt.

Vorteilhafte Weiterbildungen der Erfindung sind in den Unteransprüchen angegeben.

Die Erfindung wird im folgenden anhand eines figürlich dargestellten Ausführungsbeispiels näher erläutert.

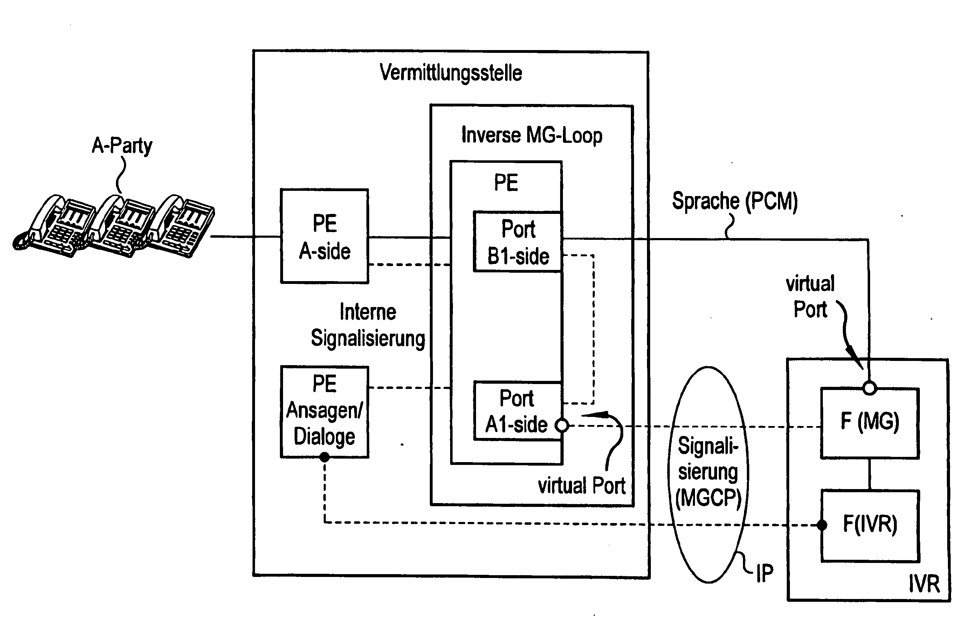

Demgemäß zeigt die Figur eine Vermittlungsstelle V, die in Wirkverbindung mit einem externen Ansage- und Dialog-System IVR steht. Das externe Ansage- und Dialog-System IVR besteht zum einen aus einer Hardwareplattform, auf der die Funktionalität zum Ablauf gelangt. Die Funktionalität wird erfindungsgemäß als Kombination zweier Funktionskomplexe modelliert.

Der 1. Funktionskomplex besteht aus dem externen Ansage- und Dialog-Systems F(IVR) im Paketnetz mit einer internen paketbasierten Schnittstelle zu einem 2. Funktionskomplex für die Ansagen und Endbenutzereingaben enthaltenden Nutzdaten.

Zur Steuerung des externen Ansage- und Dialog-Systems IVR durch die Vermittlungsstelle V kommt das zur Steuerung des Media Gateways MG über IP eingesetzte Signalisierungsprotokoll MGCP zum Einsatz. Die Steuerung der Ansage/ Dialogfunktionalität erfolgt durch Einführung von Zusatzparameter in diesem Protokoll, die den Ablauf der Ansage- und Dialogfunktion beschreiben. Derartige IVR-Parameter sind insbesondere die Nummer bzw. der Name von Ansage oder Dialog, die Anzahl der Wiederholungen, die Maßnahmen im Fehlerfall oder bei fehlender Eingabe vom Endbenutzer sowie gegebenenfalls individuelle Parameter, wie eine geänderte Rufnummer. Beispiele für sinnvolle Parameter finden sich in der INAP-, MGCP- und H.248-Standardisierung.

Der 2. Funktionskomplex besteht aus dem Media Gateway F(MG), das die paketbasierte Schnittstelle für die die Ansagen und Endbenutzereingaben enthaltenden Nutzdaten des externen Ansage- und Dialog-Systems IVR in ein TDM-Datenstrom umwandelt. Dieser wird bidirektional zwischen Vermittlungsstelle V und Media Gateway MG über PCM-Trunks transportiert. Das Media Gateway F(MG) wird ebenfalls von der Vermittlungsstelle V über das zur Steuerung eines Media Gateways über IP eingesetzte Signalisierungsprotokoll MGCP gesteuert.

Damit ergeben sich in der Kombination der beiden Funktionskomplexe F(IVR) und F(MG) auf der Hardwareplattform für das externe Ansage- und Dialog-Systems IVR nach außen folgende Schnittstellen:
- PCM-Trunks für den TDM-Nutzdatenstrom,
- paketbasierte Signalisierungssehnittstelle zur Steuerung von Media Gateway F(MG) und externem Ansage- und Dialog- Systems F(IVR).

Die Steuerung des externen Ansage- und Dialog-Systems IVR erfolgt mit der in der deutschen Patentanmeldung DE 10047129.3 beschriebenen peripheren Einrichtung mit virtuellen Ansage- und/ oder Dialogports. Diese periphere Einrichtung mit virtuellen Ansage-und/oder Dialogports setzt die B-seitige Belegungen seiner Ports durch die Vermittlungsstelle um auf eine Belegungssignalisierung des dem Port zugeordneten Media Gateways mit IVR-Funktionalität. Die Aufträge zum Spielen von Ansagen und Dialogen werden von dieser peripheren Einrichtung in Richtung Media Gateways mit IVR-Funktionalität ausgebracht. Rückmeldungen des externen Ansage- und Dialog-Systems IVR, die das Ende der Ansage anzeigen oder den Input des Endnutzers enthalten, erfolgen an die zugeordnete periphere Einrichtung mit virtuellem Ansage- und/oder Dialogport. Sämtliche Signalisierungen zwischen der das virtuelle Ansage- / und Dialogport betreuenden peripheren Einrichtung und dem zugeordneten externen IVR-System erfolgt über das Signalisierungsprotokoll MGCP, das zum Zugriff auf ein Media Gateway verwendet wird.

Im Gegensatz zur Anordnung des externen Ansage- und Dialog-Systems im Paketnetz, in der das externe Ansage- und Dialog-System seinen Nutzdatenstrom außerhalb der Vermittlungsstelle in das Paketnetz versendet, müssen bei dem hier vorgestellten Verfahren zwei weitere Schnittstellen von der Vermittlungsstelle bedient werden, nämlich die Schnittstelle zu den PCM-Trunks für TDM-Nutzdatenstrom und die paketbasierte Signalisierungsschnittstelle zur Steuerung vom Media Gateway im externen Ansage- und Dialog-Systems IVR.

Zur Steuerung des Media Gateway im externen Ansage- und Dialog-System IVR und zur Durchschaltung der PCM-Trunks in der Vermittlungsstelle wird zusätzlich zu der in den Verbindungsauf- und -abbau involvierten peripheren Einrichtung PE zur Terminierung der A-seitigen Teilnehmer oder Trunks und zu der peripheren Einrichtung PE mit virtuellen Ansage-und/oder Dialogports eine weitere periphere Einrichtung in die Verbindung eingeschleift. Diese eingeschleifte periphere Einrichtung, im folgenden inverse MG-Loop genannt, enthält abgehende und ankommende ISUP-Ports.

An die Sprachkanäle der abgehenden ISUP-Ports sind die PCM-Trunks zum Media Gateway des externen Ansage- und Dialog-System IVR angeschlossen. Die ankommenden ISUP-Ports sind virtuelle Ports, da sie keine physikalischen Trunks terminieren. Jedem dieser virtuellen Ports ist ein PCM-Kanal des Media Gateway im externen Ansage- und Dialog-System IVR zugeordnet.

Die virtuellen Ports steuern die Ports des Media Gateway im externen Ansage- und Dialog-System IVR über das paketbasierte Signalisierungsprotokoll, das zum Zugriff auf ein Media Gateway MG verwendet wird. Von den ankommenden ISUP-Ports aus wird über das Koppelnetz eine Verbindung zu der peripheren Einrichtung mit virtuellen Ansage-und/oder Dialogports aufgebaut. Der Signalisierungsweg innerhalb der inversen MG-Loop und von dieser zur peripheren Einrichtung mit virtuellen Ansage-und/oder Dialogports muss erweitert werden, um die vom Zentralprozessor oder von der A-seitigen peripheren Einrichtung gesendeten Parameter zur Ansage- und Dialogsteuerung zu übertragen.

Benötigt ein Leistungsmerkmal oder ein Dienst in der Vermittlungsstelle das Spielen einer Ansage oder eines Dialogs, so erfolgt die Auswahl eines geeigneten B-seitigen virtuellen Ansage- und/oder Dialogports. Die Einrichtung dieser Ports erfolgt in der bekannten Weise, wobei jedoch administrativ eine vorzunehmende Kennzeichnung erfolgt, aus der die Virtualität der Ressource hervorgeht, d.h. die Tatsache, daß das Port in einem Gerät außerhalb der Vermittlungsstelle befindlich ist und von der Vermittlungsstelle gesteuert wird. Die Konstellation, dass von einem realen Port aus eine Verbindungsanforderung zu einem als virtuell gekennzeichneten Port besteht, dient als Indikator zum Einschleifen der inversen MG-Loop.

Über die inverse MG-Loop erfolgt sodann zum einen die Belegung eines PCM-Trunks zum Media Gateway im externen Ansage- und Dialog-System IVR und zum anderen die Belegung eines virtuellen Ports zur Steuerung des Media Gateway im externen Ansage- und Dialog-System IVR. Ferner wird die Belegung des virtuellen Ansage- und/oder Dialogports und die Übertragung der die gewünschte IVR-Funktion beschreibende Auftragssignalisierung an die zugehörige periphere Einrichtung zur vermittlungstechnischen Bearbeitung des Ansage- und/oder Dialogports initiiert.

Damit wird die Wiederverwendbarkeit der in der klassischen Vermittlungsstelle implementierten Dienste mit IVR-Anteilen ermöglicht, da diese nicht geändert werden müssen, weil sie in der genannten peripheren Einrichtung die ihnen bekannte periphere Einrichtung mit IVR-Funktion vorfinden. Daß die IVR-Funktion letztlich von einem externem System bereitgestellt wird, bleibt diesen Software-Funktionen verborgen.

## Patentansprüche

1. Verfahren zur Steuerung von Ansagen und Dialogen in einer TDM basierten Vermittlungsstelle, die periphere Einrichtungen aufweist,
**dadurch gekennzeichnet,**
**daß** die peripheren Einrichtungen mit virtuellen Ansagen- und Dialogports versehen werden,
**daß** eine externe Hardwareplattform vorgesehen ist, auf der wenigstens ein Funktionskomplex modelliert wird, durch welchen die externe Hardwareplattform Ansagen - und Dialogfunktionalität erhält,
**daß** zwischen den peripheren Einrichtungen und der externen Hardwareplattform eine paketbasierte Steuerschnittstelle besteht, über die die externe Hardwareplattform von mindestens einer der peripheren Einrichtungen mit virtuellen Ansagen- und Dialogports angesteuert wird,
**daß** in den Verbindungsaufbau eine weitere Schnittstelle eingeschleift wird, über die der Ansagen und Dialoge führende TDM Datenstrom übertragen wird.

2. Verfahren nach Anspruch 1,
**dadurch gekennzeichnet,**
**daß** der wenigstens eine Funktionskomplex als externes Ansage - und Dialogsystem und/oder als Netzübergang zwischen paketbasiertem und TDM-basiertem Netz ausgebildet ist.

3. Verfahren nach Anspruch 1, 2,
**dadurch gekennzeichnet,**
**daß** die paketbasierte Steuerschnittstelle ein standardisiertes Protokoll unterstützt.

4. Verfahren nach Anspruch 1 bis 3,
**dadurch gekennzeichnet,**
**daß** die weitere Schnittstelle als PCM Schnittstelle zur weiteren peripheren Einrichtung ausgebildet ist.

5. Verfahren nach einem der Ansprüche 1 bis 4,
**dadurch gekennzeichnet,**
**daß** die externe HW-Plattform angesteuert wird wie ein paketbasiertes IVR-System und ein hiervon getrennter Netzübergang zwischen Paketnetz und TDM-Netz.

## Claims

1. Method for controlling announcements and dialogues in a TDM-based exchange which has peripheral devices,
**characterized**
**in that** the peripheral devices are provided with virtual announcement and dialogue ports,
**in that** an external hardware platform is provided which is used to model at least one function complex which provides the external hardware platform with announcement and dialogue functionality,
**in that** between the peripheral devices and the external hardware platform there is a packet-based control interface by means of which the external hardware platform is actuated by at least one of the peripheral devices with virtual announcement and dialogue ports,
**in that** a further interface is looped into the connection setup and is used to transmit the TDM data stream carrying announcements and dialogues.

2. Method according to Claim 1,
**characterized**
**in that** the at least one function complex is in the form of an external announcement and dialogue system and/or in the form of a network gateway between the packet-based and TDM-based networks.

3. Method according to Claims 1, 2,
**characterized**
**in that** the packet-based control interface supports a standardized protocol.

4. Method according to Claims 1 to 3,
**characterized**
**in that** the further interface is in the form of a PCM interface to the further peripheral device.

5. Method according to one of Claims 1 to 4,
**characterized**
**in that** the external HW platform is actuated like a packet-based IVR system and a separate network gateway between packet network and TDM network.

## Revendications

1. Procédé de commande d'annonces et de dialogues dans un central téléphonique basé sur un multiplexage par répartition dans le temps (TDM) qui comprend des dispositifs périphériques,
**caractérisé**
**en ce que** les dispositifs périphériques sont pourvus de ports d'annonces et de dialogues virtuels,
**en ce que** dialogues,
**en ce qu'**il existe, entre les dispositifs périphériques et la plateforme de matériel externe, une interface de commande basée sur des paquets par le biais de laquelle la plateforme de matériel externe est commandée par au moins un des dispositifs périphériques pourvus de ports d'annonces et de dialogues virtuels,
**en ce qu'**une interface supplémentaire, par le biais de laquelle le flux de données TDM permettant aux annonces et aux dialogues de circuler est transmis, intervient dans l'établissement de la communication.

2. Procédé selon la revendication 1,
**caractérisé**
**en ce que** le au moins un complexe de fonctions est exécuté en tant que système d'annonces et de dialogues externe et/ou en tant que passerelle entre un réseau basé sur des paquets et un réseau basé sur un procédé TDM.

3. Procédé selon la revendication 1, 2,
**caractérisé**
**en ce que** l'interface de commande basée sur des paquets supporte un protocole normalisé.

4. Procédé selon les revendications 1 à 3,
**caractérisé**
**en ce que** l'interface supplémentaire est exécutée en tant qu'interface PCM vers un autre dispositif périphérique.

5. Procédé selon l'une des revendications 1 à 4,
**caractérisé**
**en ce que** la plateforme de matériel externe est commandée comme un système IVR basé sur des paquets et une passerelle séparée de celui-ci entre un réseau à commutation de paquets et un réseau TDM.
